# EUROPÄISCHE PATENTSCHRIFT

(11) **EP 1 421 659 B1**
(45) Veröffentlichungstag und Bekanntmachung des Hinweises auf die Patenterteilung: **20.07.2005**
(21) Anmeldenummer: 02767132.0
(22) Anmeldetag: 28.08.2002
(51) Int. Cl.: H02B 13/025

(54) **ELEKTRISCHE SCHALTANLAGE IN GEKAPSELTER BAUWEISE**
ELECTRIC SWITCHGEAR WITH AN ENCLOSED DESIGN
INSTALLATION DE DISTRIBUTION ELECTRIQUE DE TYPE BLINDEE

(30) Priorität: 30.08.2001 DE 10143715
(43) Veröffentlichungstag der Anmeldung: 26.05.2004
(73) Patentinhaber: SIEMENS AKTIENGESELLSCHAFT, 80333 München (DE)
(72) Erfinder: MAHN, Gildo, 63589 Linsengericht (DE); WENGE, Brunhilde, 39167 Eichenbarleben (DE); MILBICH, Achim, 68753 Waghäusel (DE)
(86) Internationale Anmeldenummer: PCT/DE2002/003194
(87) Internationale Veröffentlichungsnummer: WO 2003/026089

(56) Entgegenhaltungen:
- DE-A- 2 420 679
- DE-A- 19 908 577

## Beschreibung

Die Erfindung bezieht sich auf eine elektrische Schaltanlage in gekapselter Bauweise mit einem einen Innenraum der Schaltanlage mit einem weiteren Raum verbindenden Kanal zur Führung eines Gasstromes.

Eine derartige Schaltanlage ist beispielsweise aus der deutschen Patentschrift DE 196 95 304 C1 bekannt. Bei der bekannten Schaltanlage handelt es sich um eine elektrische Anlage für den Mittelspannungsbereich, welche im Wesentlichen durch mehrere aneinander gereihte Schaltschränke räumlich begrenzt ist. In den als Kapselung wirkenden Schaltschränken sind verschiedene elektrische Einrichtungen wie beispielsweise elektrische Leitungen, Transformatoren, Sammelschienen und Leistungsschalter angeordnet.

Kommt es im Inneren der gekapselten Schaltanlage zu einem Fehler, bei dem ein Lichtbogen entsteht, so entwickelt sich infolge des Lichtbogens im Innern eine Druckwelle. Um ein Zerstören der Kapselung der dortigen Schaltanlage zu verhindern, ist vorgesehen, eine aufgrund des Lichtbogens entstehende Gasströmung über Kanäle nach außen zu leiten. - Um einen Schutz von vor den Auslassöffnungen des Kanals befindlichen Personen und Gegenständen zu gewährleisten, sind die Auslassöffnungen mit je einem Dämpfelement versehen. Dieses Dämpfelement weist eine Vielzahl von Deflektorelementen auf, welche ein Labyrinth für den Gasstrom darstellen. Durch das Dämpfelement wird der Weg des strömenden Gases erheblich verlängert. Weiterhin wirken die Deflektorelemente als Kühlelemente. Am Dämpfelementauslass herrschen hinsichtlich des Gasstromes leicht beherrschbare bzw. ungefährliche Verhältnisse.

Um eine gute Wirkung des Dämpfelementes zu erreichen, ist eine große Anzahl von einzelnen Deflektorelementen notwendig. Um den Gasstrom entlang eines möglichst langen Strömungsweges an möglichst vielen Deflektorelementen vorbeizuführen, wird ein Bauvolumen benötigt, welches nicht beliebig zu vermindern ist. Die nicht beliebig verkleinerbare Konstruktion des Dämpfelementes schränkt die Anordnung eines derartigen Dämpfelementes an einer Schaltanlage erheblich ein. Weiterhin ist es problematisch, die Auslassöffnung eines derartigen Dämpfelementes in beliebiger Richtung, beispielsweise in einen Bediengang der Schaltanlage oder unmittelbar gegen Gebäudewände zu richten. Selbst bei einer sehr guten Dämpfung und Abkühlung des Gasstromes durch das Dämpfelement kann eine Gefährdung von Personen und Material nicht ausgeschlossen werden. Aufgrund der vorgenannten Bedingungen ist man hinsichtlich der Anordnung von Kanälen an gekapselten Schaltanlagen bei den bekannten Konstruktionen relativ eingeschränkt.

Die DE-A-2 420 679 offenbart einem Kanal zur Führung eines Gasstromes einer elektrischen Schaltanlage entsprechend dem Oberbegriff des Anspruchs 1. Der vorliegenden Erfindung liegt die Aufgabe zugrunde, einen Kanal zur Führung eines Gasstromes so auszubilden, dass eine flexiblere Anordnung von Einlass- und Auslassöffnungen des Kanales ermöglicht wird.

Die Aufgabe wird bei einem Kanal zur Führung eines Gasstromes einer elektrischen Schaltanlage mit den Merkmalen des Anspruchs 1 gelöst.

Bei den bekannten Schaltanlagen war es stets das Ziel, den im Innenraum auftretenden Druckanstieg durch Öffnungen und Kanäle, die gegebenenfalls erst bei Bedarf freigegeben werden, nach außen zu leiten. Im Gegensatz dazu ist vorgesehen, den Kanal bei einem im Innenraum auftretenden kritischen Druckanstieg zu verschließen. Dadurch wird verhindert, dass aus diesem Kanal, beispielsweise im Falle eines Lichtbogens im Innenraum, heiße Gase austreten können. Dadurch ergibt sich hinsichtlich der Anordnung derartiger Kanäle eine hohe Flexibilität. Es können verschiedene Öffnungen derartiger Kanäle vorgesehen sein, welche im stationären Betriebsfall geöffnet sind und so das Strömen von Kühlluft durch das Kapselungsgehäuse der Schaltanlage ermöglichen. Diese Öffnungen können sogar in Richtung von Bediengängen der Schaltanlage ausgerichtet sein, da aufgrund der verschließbaren Konstruktion das Bedienpersonal vor dem Beströmen mit heißen Gasen geschützt ist.

Weiterhin ist vorteilhaft vorgesehen, dass dem Kanal ein Schließmechanismus zugeordnet ist, durch welchen in Abhängigkeit einer Druckdifferenz zwischen dem Innenraum und dem weiteren Raum der Kanal verschließbar ist.

Ist dem Kanal ein Schließmechanismus zugeordnet, so kann das Verschließen in einfacher Weise mechanisch erfolgen. Wird nunmehr die Druckdifferenz zwischen dem Innenraum, in welchem beispielsweise ein Lichtbogen brennt, und dem weiteren Raum genutzt, so kann auf das Erfassen zusätzlicher Größen zur Steuerung des Verschließens des Schließmechanismus verzichtet werden. Die Nutzung der Druckdifferenz zum Verschließen des Schließmechanismus ist eine äußerst zuverlässige und kostengünstige Variante zur Steuerung des Schließvorganges. Der Kanal kann sowohl den Innenraum einer Schaltanlage mit der Umgebung der Schaltanlage verbinden als auch den Innenraum der Schaltanlage mit einem weiteren Raum, beispielsweise einem nebengeordneten Schaltschrank. Der Kanal dient im Normalbetriebsfall der Kühlung und wird im Störungsfall verschlossen.

Eine vorteilhafte Ausgestaltung sieht weiterhin vor, dass der Kanal durch den Druckanstieg dauerhaft verschließbar ist.

Ist der Kanal dauerhaft verschlossen, so lässt sich das Ansprechen des Schließmechanismus leicht durch in Augenscheinnahme oder andere geeignete Prüfverfahren feststellen. Wird nunmehr festgestellt, dass die Störung beseitigt ist, die zum Verschließen des Kanals geführt hat, so kann der Schließmechanismus wieder geöffnet werden. Dadurch ist sichergestellt, dass kein spontanes ungewolltes Öffnen und Verschließen des Kanals auftritt.

Vorteilhafterweise kann weiterhin vorgesehen sein, dass der Kanal durch eine plastische Verformung an dem Schließmechanismus verschließbar ist.

Erfolgt eine plastische Verformung an dem Schließmechanismus, so ergeben sich konstruktiv sehr einfache Ausgestaltungsvarianten für das Verschlusselement selbst. Weiterhin kann durch die Stabilität des Schließmechanismus mit einfachen Mitteln die Ansprechempfindlichkeit des Schließmechanismus eingestellt werden. Je nachdem, bei welchem Anstieg des Druckes im Innenraum ein Ansprechen erwünscht ist, kann der Schließmechanismus derartig gestaltet sein, dass eine größere oder kleinere Kraft zur plastischen Verformung notwendig ist.

Weiterhin kann vorteilhaft vorgesehen sein, dass der Schließmechanismus eine unter plastischer Verformung ihrer Befestigung schwenkbare Klappe aufweist.

Eine derartige schwenkbare Klappe ist eine konstruktiv äußerst einfache Gestaltungsvariante. Auf komplizierte Ausgestaltungen des Verschlusselementes kann so verzichtet werden.

Es kann vorgesehen sein, dass die schwenkbare Klappe eine in den Kanal hineinragende Blechplatte ist.

Die Nutzung einer Blechplatte ist eine der einfachsten Ausgestaltungsvarianten der Klappe. Derartige Blechplatten sind in einem Stanzverfahren sehr einfach herstellbar. Nach dem Schließen der Klappe kann mit einem sehr geringen Kostenaufwand die betätigte Klappe gegen eine noch nicht beanspruchte Klappe ausgetauscht werden. Somit kann auf Reparaturen und Neueinstellungen der Klappe nach einem Ansprechen verzichtet werden.
Aufgrund der steten Verwendung von unbenutzten Klappen kann das Ansprechverhalten der Klappe als konstant angenommen werden.

Weiterhin kann vorgesehen sein, dass dem Schließmechanismus eine Arretiervorrichtung zugeordnet ist, welche beim Schließen einrastet und ein Öffnen des Kanals verhindert.

Nach dem Erlöschen eines Störlichtbogens, der einen sehr schnellen, sehr starken Druckanstieg im Innenraum der elektrischen Schaltanlage bewirkt hat, ist es möglich, dass nach dessen Erlöschen im Innenraum ein Unterdruck entsteht. Um zu verhindern, dass der Schließmechanismus durch den Unterdruck ungewollt geöffnet wird und den Kanal wieder freigibt, sind Arretiervorrichtungen vorgesehen. Derartige Arretiervorrichtungen können beispielsweise mit einem Widerhakenprofil versehene Bolzen sein, welche sich während des Schließvorganges des Verschlusselementes an ortsfesten Körperkanten verhaken und verkeilen. Darüber hinaus sind diverse weitere Varianten der Arretiervorrichtung ausführbar.

Im Folgenden wird die Erfindung anhand eines Ausführungsbeispiels in einer Zeichnung gezeigt und nachfolgend näher beschrieben.
Dabei zeigt die
- Figur 1: den schematischen Aufbau einer gekapselten elektrischen Schaltanlage, die
- Figur 2: den schematischen Aufbau einer Abdeckkappe mit Verriegelungsmechanismus, die
- Figur 3: eine Draufsicht einer schwenkbaren Klappe und die
- Figur 4: eine seitliche Ansicht einer schwenkbaren Klappe.

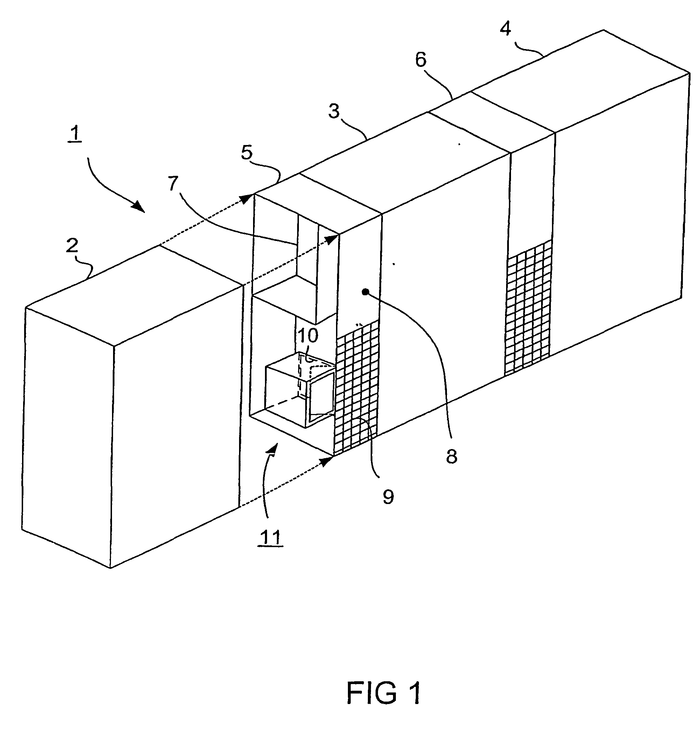

Die in der Figur 1 schematisch dargestellte Schaltanlage 1 ist eine stahlblechgekapselte Schaltanlage, welche im Wesentlichen einen ersten Schaltschrank 2, einen zweiten Schaltschrank 3 und einen dritten Schaltschrank 4 aufweist. Im Innern der Schaltschränke 2, 3, 4 sind verschiedene elektrische Baugruppen, wie beispielsweise Leistungsschalter, Strom- und Spannungswandler, Kabelanschlüsse, usw., anordbar. Zwischen dem ersten Schaltschrank 2 und dem zweiten Schaltschrank 3 ist ein erster Kühlkanal 5 angeordnet. Zwischen dem zweiten Schaltschrank 3 und dem dritten Schaltschrank 4 ist ein zweiter Kühlkanal 6 angeordnet. Der Aufbau eines derartigen Kühlkanales soll beispielhaft an dem ersten Kühlkanal 5 erläutert werden. Der erste Kühlkanal 5 wird seitlich von den jeweiligen Seitenwänden des ersten Schaltschrankes 2 und des zweiten Schaltschrankes 3 begrenzt. Zur gekapselten Durchführung von die einzelnen Schaltschränke durchlaufenden Sammelschienen ist von dem Kühlkanal 5 ein Sammelschienenraum 7 abgeteilt. Die Mantelfläche 8 des ersten Kühlkanales 5 ist umlaufend durch ein geeignetes Material, beispielsweise Stahlblech, geschlossen. Die Mantelfläche 8 des Kühlkanales 5 weist eine Vielzahl von Einströmöffnungen 9 auf. Durch diese Einströmöffnungen 9 kann Kühlluft in den Kühlkanal 5 eintreten und zwischen den Seitenwänden des ersten Schaltschrankes 2 und des zweiten Schaltschrankes 3 entlangströmen. Der Kühlkanal 5 kühlt durch Wärmeleitung über die Seitenwände des ersten Schaltschrankes 2 und des zweiten Schaltschrankes 3 die Innenräume der angrenzenden Schaltschränke. Um die Kühlwirkung des ersten Kühlkanales 5 zu verbessern, weist die Seitenwand des zweiten Schaltschrankes 3 eine Öffnung 10 auf. Durch diese Öffnung 10 ist es möglich, dass Luft zwischen dem ersten Kühlkanal 5 und dem Innenraum des zweiten Schaltschrankes 3 ausgetauscht wird und die Kühlung der einzelnen Baugruppen noch weiter verbessert wird. Um die Kühlwirkung noch zusätzlich zu verbessern, kann auch eine Zwangsventilation des ersten Kühlkanals 5 vorgesehen sein. Der Öffnung 10 ist eine spezielle Abdeckkappe 11 zugeordnet.

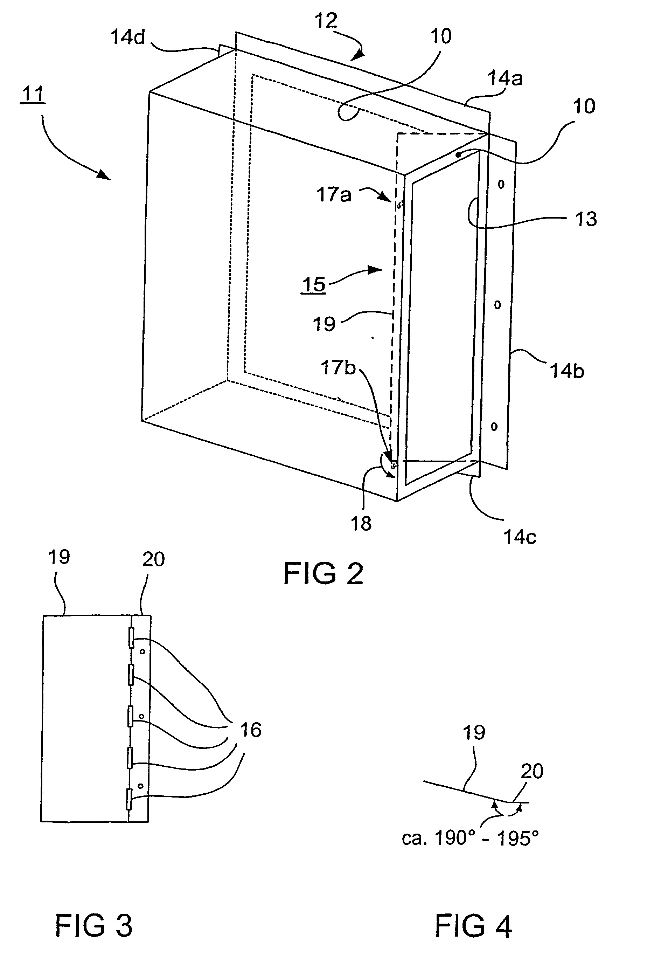

Der Aufbau und die Funktionsweise der Abdeckkappe 11 soll nunmehr anhand der Figur 2 erläutert werden.
Die Abdeckkappe 11 weist einen im Wesentlichen quaderförmigen Aufbau auf. Um eine kappenförmige Ausgestaltung zu erzielen, ist eine der Grundflächen des Quaders offen gestaltet. Diese Grundfläche 12 ist der Öffnung 10 zugewandt. In einer Schmalfläche der Abdeckkappe 11 ist eine Kanaleintrittsöffnung 13 angeordnet. Mittels der Abdeckkappe 11 ist ein Kanal gebildet, welcher einen Innenraum der Schaltanlage, nämlich den Innenraum des zweiten Schaltschrankes 3, mit einem weiteren Raum, dem ersten Kühlkanal 5 zur Führung eines Gasstromes verbindet. Der Kanal verläuft von der Kanaleintrittsöffnung 13 über die Abdeckkappe 11, die offene Grundfläche 12 und die Öffnung 10 in den zweiten Schaltschrank 3 hinein. Um die Abdeckkappe 11 über der Öffnung 10 der Seitenwand des zweiten Schaltschrankes 3 dauerhaft anzuordnen, weist die Abdeckkappe 11 an der Grundfläche 12 jeweils abgewinkelte Laschen 14a, 14b, 14c, 14d auf. Diese Laschen sind in geeigneter Weise mit der Seitenwand des zweiten Schaltschrankes 3 verbindbar, beispielsweise durch Schraub-, Niet- oder Schweißverbindungen. Der Kanaleintrittsöffnung 13 ist weiterhin ein Schließmechanismus 15 zugeordnet. Der Schließmechanismus 15 weist eine Klappe 19 auf, die in den Kanal hineinragt. Die Klappe 19 ist mittels eines unter plastischer Verformung bewegbaren Scharniers 20 gehalten. Mittels mehrerer Langlöcher 16 ist eine Sollbiegestelle gebildet, entlang welcher eine plastische Verformung bevorzugt erfolgen soll (siehe Figur 3). Entlang der Langlöcher 16 ist die Klappe 19 leicht abgewinkelt (siehe Figur 4). Um die Klappe 19 zu befestigen, ist das Scharnier 20 unter der Seitenlasche 14b einklemmbar, die der Schmalfläche 21 benachbart ist, welche die Kanaleintrittsöffnung 13 aufweist. So kann in einfacher Weise das Verschlusselement 15 zusammen mit der Abdeckkappe 11 an der Seitenwand des zweiten Schaltschrankes 3 befestigt werden. Vorteilhafterweise sind dazu lösbare Verbindungselemente, wie Schrauben oder Nieten, zu verwenden.
An der der Grundfläche 12 gegenüberliegenden Fläche sind zwei Arretiervorrichtungen 17a,b vorgesehen. Die Arretiervorrichtungen 17a,b sind im Wesentlichen senkrecht auf der Fläche angeordnet und gleichartig aufgebaut. Sie sind nach Art eines Bolzens ausgeführt. Bei einem Schließen des Schließmechanismus 15 greift das freie Ende der Klappe 19 hinter die Arretiervorrichtungen 17a,b. Durch die Verformung des Scharniers 20 und zusätzlich durch die Arretiervorrichtungen 17a,b ist die Klappe 19 in der geschlossenen Stellung arretiert. Die Arretiervorrichtungen 17a,b können umgekehrt auch auf der Klappe 19 angeordnet sein und im geschlossenen Zustand hinter eine Kante der Kanaleintrittsöffnung 13 greifen.

Durch die Kanaleintrittsöffnung 13 ist im stationären Betriebsfall ein stetiger Luftstrom und Luftmassenaustausch möglich. Die Strömungsgeschwindigkeit des Gases ist dabei derartig gering, dass der Schließmechanismus 15 nicht betätigt wird. Erst bei einem schlagartigen Auftreten eines Überdruckes im Innern des Schaltschrankes 3 wird die Klappe 19 aufgrund des hohen Druckes und der hohen Strömungsgeschwindigkeit des Gases in Richtung des Pfeiles 18 bewegt und verschließt die Kanaleintrittsöffnung 13. Durch die Arretiervorrichtungen 17a, 17b ist die Klappe 19 zuverlässig in ihrer geschlossenen Position gehalten. Die Schwenkachse des Schließmechanismus 15 verläuft dabei entlang der durch die Langlöcher 16 vorbestimmten Biegelinie. Damit ist ein Gasaustausch zwischen dem Inneren des Schaltschrankes 3 und dem ersten Kühlkanal 5 über die Kanaleintrittsöffnung 13 nicht mehr möglich.

Die Anordnung eines derartigen Schließmechanismus 15 ist nicht auf die Anordnung in zwischen zwei Schaltschränken angeordneten Kühlkanälen beschränkt. Derartige Schließmechanismen 15 können an beliebiger Stelle eines Schaltschrankes auch an Auslassöffnungen zum Außenraum angeordnet werden. Dadurch ergeben sich günstige Ausgestaltungsvarianten hinsichtlich einer flexiblen Konstruktion von gekapselten elektrischen Schaltanlagen.

## Patentansprüche

1. Kanal (13, 11, 12, 10) zur Führung eines Gasstromes einer elektrischen Schaltanlage (1) in gekapselter Bauweise, welcher einen Innenraum der Schaltanlage (1) mit einem weiteren Raum verbindet, wobei in den Kanal (13, 11, 12, 10) eine schwenkbare Verschlussklappe (19) hineinragt, welche den Kanal (13, 11, 12, 10) bei einem Druckanstieg im Innenraum verschließt,
**dadurch gekennzeichnet, dass**
die schwenkbare Verschlussklappe (19) bei Druckanstieg unter plastischer Verformung einer Sollbiegestelle den Kanal (13, 11, 12, 10) verschließt.

2. Kanal (13,11,12,10) nach Anspruch 1,
**dadurch gekennzeichnet, dass**
der Kanal (13, 11, 12, 10) nach dem Druckanstieg dauerhaft verschlossen bleibt.

3. Kanal (13,11,12,10) nach Anspruch 1 oder 2,
**dadurch gekennzeichnet, dass**
die schwenkbare Verschlussklappe (19) eine in den Kanal (13, 11, 12, 10) hineinragende Blechplatte ist.

4. Kanal (13,11,12,10) nach einem der Ansprüche 1 bis 3,
**dadurch gekennzeichnet, dass**
der schwenkbaren Verschlussklappe (19) eine Arretiervorrichtung (17a, b) zugeordnet ist, welche beim Schließen einrastet und ein Öffnen des Kanals (13, 11, 12, 10) verhindert.

5. Kanal (13,11,12,10) nach einem der Ansprüche 1 bis 4,
**dadurch gekennzeichnet, dass**
der Kanal (13, 11, 12, 10) zumindest zu einem Teil aus einer auf eine Wandung unter Zwischenlage des Befestigungsbereiches der schwenkbaren Verschlussklappe (19) aufgesetzten sowie mit der Wandung fest verbundenen und eine in derselben befindliche Öffnung (10) abdeckenden Abdeckkappe (11) gebildet ist.

6. Kanal (13,11,12,10) nach Anspruch 5,
**dadurch gekennzeichnet, dass**
die Abdeckkappe (11) quaderförmig ist.

7. Kanal (13,11,12,10) nach Anspruch 5 oder 6,
**dadurch gekennzeichnet, dass**
die Abdeckkappe (11) den Gasstrom um ca. 90° umlenkt.

## Claims

1. Channel (13, 11, 12, 10) for the purpose of guiding a flow of gas in an electrical switchgear assembly (1) of an encapsulated design, which connects an interior space of the switchgear assembly (1) to a further space, a closure valve (19), which can pivot and which closes the channel (13, 11, 12, 10) in the event of an increase in pressure in the interior space, protruding into the channel (13, 11, 12, 10), **characterized in that** the closure valve (19) which can pivot closes the channel (13, 11, 12, 10) in the event of an increase in pressure with plastic deformation of a bending point.

2. Channel (13, 11, 12, 10) according to Claim 1, **characterized in that** the channel (13, 11, 12, 10) remains closed permanently following the increase in pressure.

3. Channel (13, 11, 12, 10) according to Claim 1 or 2, **characterized in that** the closure valve (19) which can pivot is a sheet-metal plate which protrudes into the channel (13, 11, 12, 10).

4. Channel (13, 11, 12, 10) according to one of Claims 1 to 3, **characterized in that** the closure valve (19) which can pivot has an associated locking apparatus (17a, b) which latches in on closure and prevents the channel (13, 11, 12, 10) from opening.

5. Channel (13, 11, 12, 10) according to one of Claims 1 to 4, **characterized in that** the channel (13, 11, 12, 10) is formed at least partly from a cap (11), which is placed on a wall with the fastening region of the closure valve (19) which can pivot forming an intermediate layer, is firmly connected to the wall and covers an opening (10) in said wall.

6. Channel (13, 11, 12, 10) according to Claim 5, **characterized in that** the cap (11) is rectangular.

7. Channel (13, 11, 12, 10) according to Claim 5 or 6, **characterized in that** the cap (11) deflects the flow of gas through approximately 90°.

## Revendications

1. Canal (13, 11, 12, 10) destiné à véhiculer un écoulement de gaz d'une installation de distribution électrique (1) d'un mode de construction de type blindé, le canal reliant une enceinte intérieure de l'installation de distribution électrique (1) à un autre espace, et un volet de fermeture (19) pivotant pénètrant dans le canal (13, 11, 12, 10) et fermant le canal (13, 11, 12, 10) dans le cas d'une montée en pression dans l'enceinte intérieure, **caractérisé en ce que** le volet de fermeture (19) pivotant ferme le canal (13, 11, 12, 10) sous l'effet d'une déformation plastique d'une zone destinée à se plier.

2. Canal (13, 11, 12, 10) selon la revendication 1, **caractérisé en ce que** le canal, après la montée en pression, reste fermé de manière permanente.

3. Canal (13, 11, 12, 10) selon la revendication 1 ou 2, **caractérisé en ce que** le volet de fermeture (19) pivotant est une plaque de tôle pénètrant dans le canal (13, 11, 12, 10).

4. Canal (13, 11, 12, 10) selon l'une des revendications 1 à 3, **caractérisé en ce qu'**au volet de fermeture (19) pivotant est associé un dispositif d'arrêt (17a, b) qui s'enclenche lors de la fermeture et empêche une ouverture du canal (13, 11, 12, 10).

5. Canal (13, 11, 12, 10) selon l'une des revendications 1 à 4, **caractérisé en ce que** le canal (13, 11, 12, 10) est formé, au moins pour une partie, par un capot de recouvrement (11) qui est rapporté sur une paroi avec interposition de la zone de fixation du volet de fermeture (19) pivotant, et est relié de manière fixe à la paroi, en recouvrant une ouverture (10) se trouvant dans celle-ci

6. Canal (13, 11, 12, 10) selon la revendication 5, **caractérisé en ce que** le capot de recouvrement (11) est de forme parallélépipédique.

7. Canal (13, 11, 12, 10) selon la revendication 5 ou 6, **caractérisé en ce que** le capot de recouvrement (11) dévie l'écoulement de gaz d'environ 90°.
